# DEMANDE DE BREVET EUROPEEN

(11) **EP 1 046 413 A1**
(43) Date de publication de la demande: **25.10.2000**
(21) Numéro de dépôt: 00430018.2
(22) Date de dépôt: 20.04.2000
(51) Int. Cl.: A63C 5/00

(54) **Ski bob équipé d'un train glissant en prise de carres permanente**

(30) Priorité: 22.04.1999 FR 9905284
(71) Demandeur: Ligones, Hubert, 30130 Saint Alexandre (FR)
(72) Inventeur: Ligones, Eric, 30130 Saint-Alexandre (FR); Ligones, Sandrine, 38130 Echirolles (FR); Ligones-Laffort, Béatrice, 31820 Pibrac (FR); Ligones, Hubert, 30130 Saint Alexandre (FR)
(74) Mandataire: Perin, Georges

(57) **Abrégé**

Un train glissant pour ski bob comprenant une monture pour son montage sur le châssis du ski bob, ladite monture étant munie d'un ski unique ou de deux skis formant, sur support plat, une semelle de glisse en prise de carres extérieures permanente et un ski bob muni au moins d'un train glissant avant directeur ou d'un train glissant arrière suiveur ci-dessus.

## Description

La présente invention concerne un ski bob équipé d'un train glissant en prise de carres permanente.

Dans les sports de glisse à proprement parler et en exceptant le surf, s'est développée à côté du ski traditionnel toute une série de manières différentes de skier : le monoski, sur lequel les deux pieds sont côte à côte, le sqwal, sur lequel les pieds sont situés l'un derrière l'autre sur un monoski de largeur un peu supérieure à celle d'un ski traditionnel, les miniskis dits "patinettes", etc.

Ces sports ou ces moyens de se déplacer précités, font tous appel à une technique particulière pour se diriger et trouver l'équilibre. Cette technique est en fait une combinaison de techniques de flexion, d'appui, d'extension, d'angulation et de glissade latérale.

Tout le monde n'est pas naturellement doué pour se maintenir en équilibre sur les dispositifs précédents. Il est en effet plus rassurant d'avoir des appuis avant et arrière éloignés du centre de gravité du corps, afin de se sentir en équilibre. Mais il n'existe actuellement dans les sports ou moyens de déplacement précités aucun véhicule du type " bicyclette ", c'est à dire sur lequel on se déplace assis, ou du type " trottinette ", sur laquelle on se déplace debout, tous deux étant munis à l'avant d'une direction, guidon ou volant par exemple, qui donne satisfaction. En effet, leur maniabilité se fait au détriment de leur stabilité.

Il serait donc souhaitable de disposer de véhicules munis d'un châssis du type " bicyclette " ou du type " trottinette " c'est à dire un appui avant dirigé à l'aide d'un guidon, volant ou analogue, comprenant des appuis allongés antérieur et postérieur du type skis normalement en ligne lors du déplacement du véhicule en ligne droite, qui cependant soient aussi faciles à diriger qu'une bicyclette ou une trottinette .

Il existe bien des ski bobs munis à l'avant et à l'arrière de skis conventionnels donc à semelles planes, mais leur comportement en particulier en ligne droite est très instable. Rappelons qu'un ski bob est une sorte de bicyclette des neiges munie de skis courts à l'avant et à l'arrière à la place de roues, le ski avant étant doté d'une direction.

Or, après des recherches, la demanderesse a trouvé qu'un important problème de maîtrise des ski bobs provenait de la planéité des skis et qu'il était nécessaire de disposer d'une angulation statique assurant une prise de carres permanente pour garder le contrôle de l'engin. Les pieds étant désolidarisés des skis, l'angulation statique des jambes par rapport au support n'agit plus sur la prise de carres tandis que l'angulation statico-dynamique de l'équilibre et l'angulation dynamique de courbure de virage sont assurées par l'inclinaison latérale du ski bob.

Elle a aussi trouvé que la maîtrise de la direction par inclinaison latérale du ski bob était facilitée si les carres, en contact avec le support, étaient non pas parallèles ou sensiblement parallèles comme dans le ski conventionnel, mais convergeaient vers l'avant dans le train glissant arrière et/ou divergeaient vers l'avant dans le train glissant avant.

C'est pourquoi la présente demande a pour objet un ski bob comprenant un châssis muni d'un train avant directeur doté d'une direction et d'un train arrière suiveur, caractérisé en ce qu'il comprend au moins un train avant directeur glissant ou un train arrière suiveur glissant, ledit train glissant comprenant une monture pour son montage sur le châssis du ski bob, ladite monture étant munie d'un ski unique ou de deux skis formant, sur support plat, une semelle de glisse en prise de carres extérieures permanente.

Un tel train glissant est destiné à l'équipement avant et/ou arrière d'un ski bob.

Dans le cas de l'utilisation d'un ski unique, ce dernier aura donc par exemple une semelle concave de section courbe ou polygonale pour être en prise de carres extérieures permanente. De ce fait, si on l'installe à plat sur un support solide plat, il sera en contact avec ce support uniquement par tout ou partie de ses carres.

Dans un mode de mise en oeuvre de l'invention, on utilisera deux skis distincts pour former la semelle de glisse en prise de carres extérieures permanente. En effet dans un tel cas, on peut non seulement utiliser des skis de configuration conventionnelle, à semelle plate ce qui limite le coût de fabrication, mais aussi, grâce à une monture adaptée, régler à volonté l'angle relatif d'un ski par rapport à l'autre pour accentuer ou au contraire diminuer l'effet de prise de carres, comme on le verra illustré ci-après dans les figures.

En outre, on comprend de ce qui précède que seules deux carres, c'est à dire les deux carres extérieures, sont sollicitées et donc s'usent. Il est possible en intervertissant les deux skis de bénéficier de carres neuves.

Un des avantages à noter encore quant à l'utilisation de deux skis distincts est la possibilité de prévoir un dispositif de freinage actif entre les skis c'est à dire dans l'axe principal de l'engin. De ce fait le frein central ne déséquilibre pas l'engin comme un dispositif latéral et est plus simple qu'un dispositif bilatéral. Un tel dispositif est de préférence actionné au pied mais peut être actionné à la main, notamment sur le guidon du bob ski.

Sur support plat, un train de ski bob selon l'invention présente une semelle de glisse en prise de carres extérieures permanente. Comme on l'a vu, cette semelle de glisse peut être réalisée en une semelle unique, concave de section courbe ou polygonale par exemple, ou en deux semelles distinctes, comme on raisonne pour un monoski ou une paire de skis.

Dans d'autres conditions de mise en oeuvre de l'invention, le train de ski bob ci-dessus est caractérisé en ce qu'il comprend deux skis distincts dont les semelles ne sont pas coplanaires et forment des angles a de prise de carres compris entre 2° et 30°, de préférence compris entre 2° et 20°, notamment compris entre 5° et 10°, tout particulièrement compris entre 6° et 8°. Pour un ski unique dont la semelle est globalement configurée comme celle d'un monoski nautique de compétition, de forme concave, on peut considérer l'angle fait par les tangentes des bords de la semelle avec le support.

Dans d'autres conditions préférentielles de mise en oeuvre de l'invention, les deux skis distincts sont installés sur une monture autorisant le réglage des angles α de prise de carres.

L'utilisation de deux skis distincts présente notamment encore un avantage supplémentaire. Il est possible, à l'aide d'une monture appropriée, de faire converger ou diverger plus ou moins les skis. On peut notamment les faire converger vers l'avant pour obtenir l'effet du ski en chasse neige. On peut régler à volonté cet effet et plus le chasse neige est ouvert, plus on obtient un effet de ralentissement qui facilite l'usage du ski bob notamment en période d'apprentissage et en conditions difficiles.

C'est pourquoi la présente demande a aussi pour objet un ski bob muni un train glissant ci-dessus, dont les carres extérieures ne sont pas sensiblement parallèles mais convergent ou divergent vers l'avant.

L'angle de convergence ou de divergence des carres sera avantageusement compris entre 2° et 30 °, de préférence compris entre 2° et 20°, notamment compris entre 2° et 6°, tout particulièrement compris entre 2° et 4°. On appelle " angle de convergence ou de divergence " l'angle formé par les axes principaux des skis, qui est plus particulièrement l'angle formé par les carres en contact avec le support et placées à l'extérieur des skis.

La présente demande a encore pour objet un ski bob muni d'un train glissant ci-dessus comprenant deux skis distincts installés sur une monture autorisant le réglage de convergence ou de divergence des carres.

Dans toujours d'autres conditions préférentielles de mise en oeuvre de l'invention, le ski unique ou les deux skis distincts sont installés sur une monture autorisant leur basculement d'avant en arrière, ce qui permet au train glissant de suivre les irrégularités de la piste tout en conservant un maximum de longueur de carres en contact avec le support, neige ou glace par exemple.

Dans des conditions de réalisation avantageuses, l'installation autorisant le basculement, pivot réel par exemple ou virtuel, comprend un dispositif limiteur de débattement de basculement afin de n'autoriser qu'un basculement limité à un angle de - 45° à + 45°, de préférence de ± 30°, particulièrement ± 20°. Par rapport à la position d'équilibre naturel du train, la pointe du train peut-être autorisée à piquer d'un angle de 20° vers le bas, tandis qu'elle est autorisée à se cabrer de 40° vers le haut.

Un système de butées, amorties ou non, peut-être mis en oeuvre à cette fin.

Dans ces conditions préférentielles de mise en oeuvre, l'installation autorisant le basculement du train comprend un dispositif élastique, cabrant avantageusement le train à vide.

Ainsi par exemple lors d'un saut, l'avant du train ne risque pas de se planter en reprenant contact avec le sol.

Dans encore d'autres conditions préférentielles de mise en oeuvre, l'installation autorisant le basculement du train d'avant en arrière autorise également le basculement latéral du train glissant et comprend un moyen de rappel installé entre le châssis du ski bob et la monture.

Un dispositif particulièrement intéressant comprend deux boudins compressibles installés l'un derrière l'autre dans l'axe de déplacement et procurant un axe virtuel de basculement.

En charge, par exemple le boudin avant travaille en compression et se détend lorsque la charge se relâche, notamment à vide ou lors d'un saut pour tirer vers le haut l'avant du train et ainsi le cabrer.

Un tel montage est illustré ci-après sur les figures. Il comprend par exemple une vis dont la tête est fixée vers l'avant du train par rapport à son axe de rotation avant-arrière, et dont la tige traverse un boudin en matériau élastomère compressible installé entre le châssis du ski bob et un écrou de retenue de préférence complété d'une rondelle. Il comprend de préférence deux vis installées l'une derrière l'autre ayant un tel montage.

Un tel dispositif présente l'avantage supplémentaire d'autoriser si désiré le roulis du patin par rapport au châssis.

Par un choix approprié de l'élasticité de l'anneau compressible, selon l'impulsion que l'on donne au châssis on peut soit conserver l'inclinaison par rapport au châssis dans le plan transversal, soit conserver le train « à plat » sur le support tandis que le châssis penche vers l'intérieur d'un virage.

La trajectoire de l'utilisateur, suivant un plan vertical, est une courbe "lissée" par conséquent très amortie par rapport à celle de la piste grâce aux effets de balanciers des trains avants et arrières peu ou pas flexibles.

Une telle configuration est économique et légère en assurant un comportement stable et fiable du ski bob.

Notamment dans le cas de skis bobs particulièrement destinés au sport et à la compétition et toujours en vue de conserver une bonne longueur de carres en contact avec la piste, il est préférable de laisser libres l'avant et l'arrière des skis et en outre de laisser un ski libre vis à vis de l'autre.

C'est pourquoi la présente demande a encore pour objet un train de ski bob ci-dessus, caractérisé en ce que l'avant et l'arrière du ou des skis sont libres de flexion vis à vis de leur monture et de préférence l'un vis à vis de l'autre.

Des ski bobs munis de trains glissants selon l'invention sont doués de remarquables qualités. En particulier on peut noter :
- une bonne prise de carres sur tout support, en particulier sur support dur et très glissant, en traversée, en forte pente, sur piste de remontée mécanique, etc. ;
- une excellente tenue latérale pendant les virages tout en autorisant un glissement latéral progressif et contrôlé ;
- la possibilité d'obtenir des engins de loisir accessibles au grand public, de faible coût et d'apprentissage instantané ;
pour les trains munis de deux skis
- une grande maîtrise de la trajectoire transformant l'engin de loisirs en engin de sport et de compétition.

Ces trains glissants se distinguent nettement des luges et des dispositifs antérieurs :
- soit par leur usage en combinaison par deux l'un à l'avant, l'autre à l'arrière de type boggie ;
- soit par leur usage de type monoski concave s'inclinant en totalité dans les virages ;
- soit par leur usage en " balancier " comme "lisseur" de trajectoire ;
- soit par leur usage en " balancier " de trains indéformables ou presque mais capables de conserver un maximum de carres en prise avec le support.

C'est pourquoi la présente demande a encore pour objet un ski bob muni d'au moins un train glissant tel que défini ci-dessus ou de préférence deux trains, l'un directeur à l'avant, l'autre suiveur à l'arrière ou encore toute association d'au moins un train glissant tel que défini ci-dessus avec un autre patin, ski, roue, chenille, roulettes, etc.

Les conditions préférentielles de mise en oeuvre des trains ci-dessus décrites s'appliquent également aux ski bobs munis de tels trains.

L'invention sera mieux comprise si l'on se réfère aux dessins annexés sur lesquels :
- La figure 1 représente une vue en perspective d'un train selon l'invention,
- La figure 2 représente une vue de face éclatée de la figure 1,
- La figure 3 représente une vue de face en coupe au niveau d'un axe de basculement d'un train du type de la figure 1 mais monoski.
- La figure 4 représente une vue latérale en élévation d'un ski-bob selon l'invention à vide.
- La figure 5 représente une vue latérale en élévation d'un ski-bob selon l'invention en charge
- La figure 6 représente un détail du train arrière
- La figure 7 représente des vues de face en coupe transversale partielles du train arrière de la figure 6 et illustre le comportement d'un tel train selon l'impulsion donné par l'utilisateur.

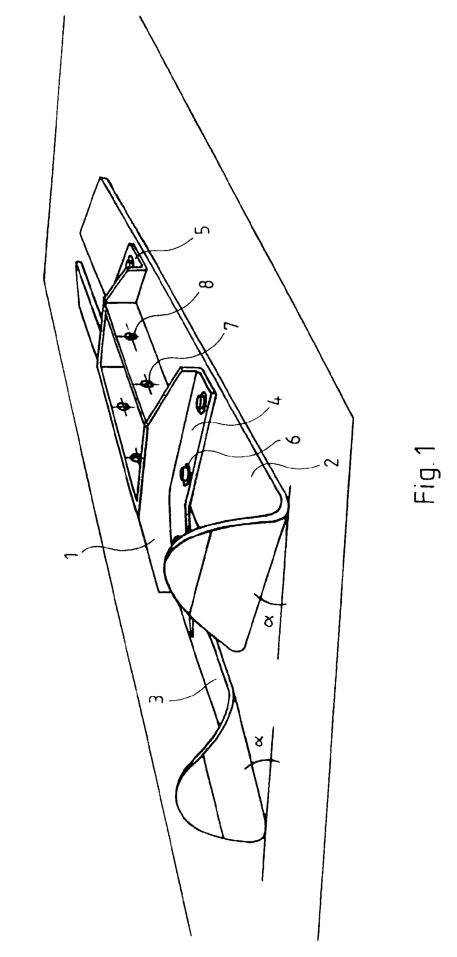

Sur la figure 1, on distingue un train isolé de son ski bob, sur lequel on peut distinguer une monture 1 installée à cheval sur deux skis 2 et 3. La monture 1 comprend des méplats 4, 5, sous lesquels sont fixés les skis 2,3 par l'intermédiaire de vis 6. Ces méplats 4, 5 sont coudés en leur milieu pour ne pas maintenir à plat les skis 2, 3 l'un vis à vis de l'autre mais pour leur conférer des angles respectifs a avec le support horizontal appelés angles de prise de carres, ici de 8°. Cette monture 1 est munie d'un certain nombre d'orifices 7, 8, définissant des axes horizontaux permettant grâce à un pivot le basculement avant-arrière de la monture 1 et donc de l'ensemble vis à vis du châssis du ski bob ce qui permet notamment de suivre et d'amortir les irrégularités d'une piste.

Dans la version représentée ici, les skis 2,3 sont montés en position divergente vers l'avant, c'est à dire que leurs spatules sont plus écartées que leurs talons.

On observe aussi que les skis 2,3 dépassent de la monture 1 tant vers l'avant que vers l'arrière, ce qui leur procure des comportements comparables aux skis conventionnels, chargés sensiblement en leur milieu, d'autant que les deux spatules et les deux talons sont indépendants entre eux. Ces effets sont amplifiés par le raccourcissement de la monture 1. La longueur réduite des skis facilite l'orientation à plat sur le support sans perdre la prise des carres.

De l'observation de cette figure on conçoit que les skis 2,3 peuvent n'en faire qu'un en " comblant " l'espace entre eux. On perd notamment alors l'indépendance des deux spatules et des deux talons.

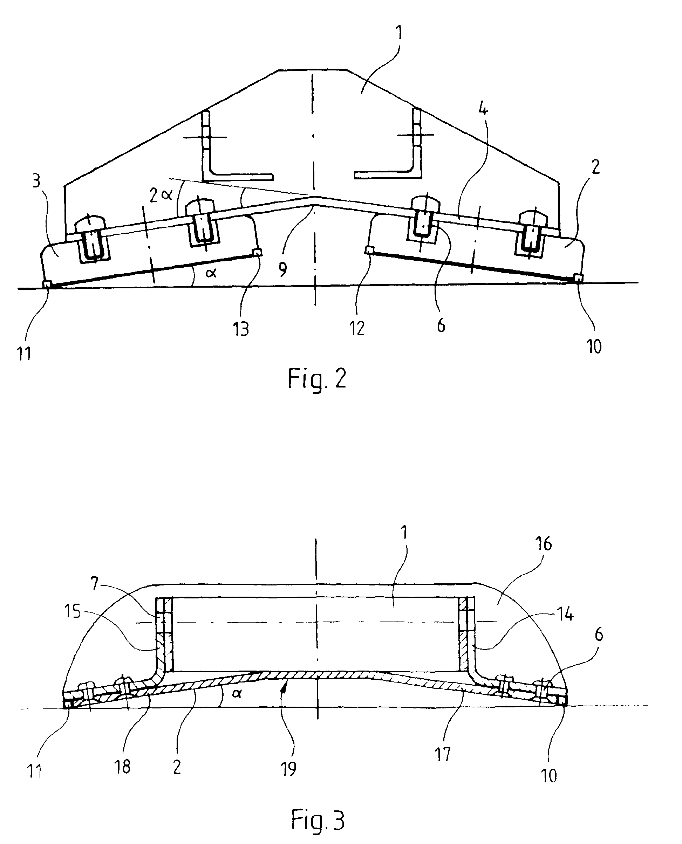

Sur la figure 2 on distingue sensiblement les mêmes éléments que sur la figure 1. On observe mieux le coude 9 formé par le méplat 4. Ce coude fait ici un angle 2a de 16°. On observe également la prise permanente sur les carres extérieures sur terrain plat. En passant d'un plan horizontal à un dévers, l'utilisateur ayant tendance à garder le buste et le châssis verticaux, cumule progressivement l'angle de prise de carres permanent et l'angle de dévers : il n'y a pas de "perte de prise de carres" redoutée pour son instabilité, il y a, au contraire, "augmentation de prise de carres" en toute sécurité. On distingue également un montage possible par vis 6 des skis 2, 3 sur la monture 1. Un moyen simple pour régler l'angle α consiste par exemple à installer entre les skis 2,3 et le méplat coudé 4 au moins une rondelle autour des vis 6 extérieures ; on augmente ainsi l'angle de prise de carres permanente. L'effet inverse est obtenu en installant les rondelles autour des vis 6 intérieures.

Pour régler la convergence des skis, on peut prévoir dans les méplats 4 une série de trous pour le passage des vis 6.

On distingue enfin les carres extérieures 10, 11 fonctionnelles, et les carres intérieures 12, 13, inutilisées pouvant être rendues fonctionnelles en intervertissant les skis.

Sur la figure 3, on distingue un train glissant indéformable ou presque, de type économique, destiné aux ski bobs de loisir de préférence.

La monture 1 comprend deux équerres latérales 14, 15 renforçant et soutenant une semelle 2 unique, pliée longitudinalement et emboutie à l'avant pour former une spatule 16 et à l'arrière pour former le talon. Les plans 17 et 18 de la semelle forment des angles de prise de carres α avec le support. Des carres 10, 11 sont prises entre les équerres 14, 15 et la semelle 2. Selon une autre forme de construction, les carres 10 et 11 sont obtenues directement par simple pliage vers le bas des bords des équerres 14, 15. Les équerres 14, 15 s'étendent des talons à la spatule 16 et sont fixées à la semelle 2 par des rivets 6 au lieu de vis. Des orifices 7 matérialisent l'axe de basculement avant-arrière sur le ski bob. Le semelle 2 est réalisée notamment en matériau à faible coefficient de frottement, de préférence en polyéthylène, ou reçoit un revêtement de cette nature.

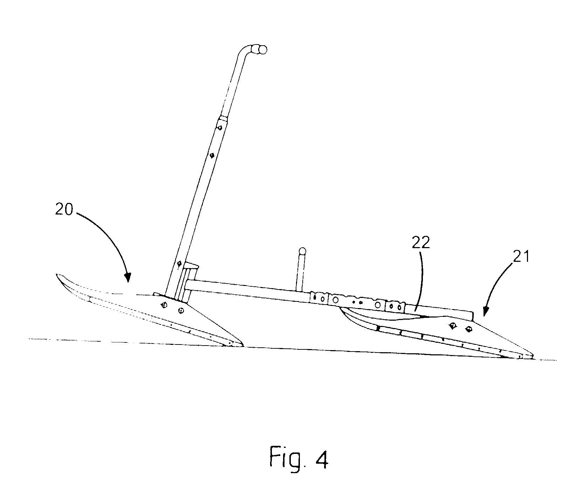

Sur la figure 4 on peut observer que tant le train avant directeur 20 que le train arrière suiveur 21 sont cabrés, en position d'équilibre naturel.

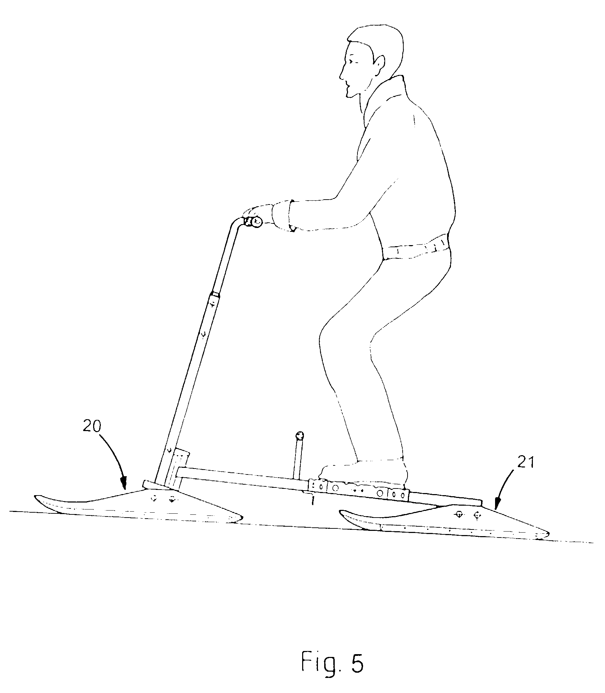

Par contre comme on peut l'observer selon la figure 5, en charge, les trains 20, 21 se plaquent contre le sol.

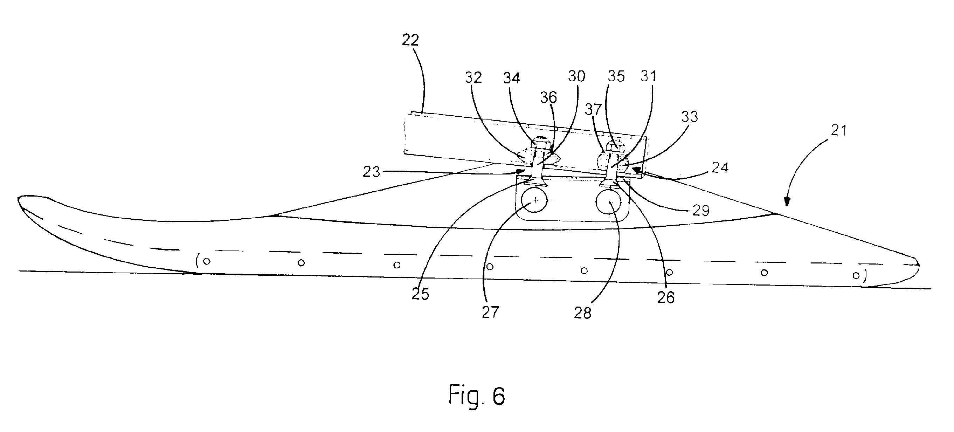

Sur la figure 6 qui correspond au train arrière de la figure 5, on peut observer que le train 21 est relié à l'arrière du châssis 22 par l'intermédiaire de deux vis 23,24 installées l'une derrière l'autre dans l'axe du déplacement du ski-bob. La tête 25,26 de chaque vis 23,24 est maintenue sous une monture 1 ayant la forme d'une plaque de montage 29 fixée au train 21 par des éléments axiaux 27,28. La tige 30,31 de chaque vis est disposée vers le haut et traverse la plaque de montage 1 ainsi que l'extrémité du châssis 22. Un boudin compressible 32,33 est installé entre le châssis 22 et un écrou 34,35 de retenue et sa rondelle 36,37. La vis 23,24 exerce une précontrainte sur le boudin 32,33.

On observe qu'en charge, le boudin avant 32 est comprimé, à l'inverse du boudin arrière 33 . On comprend qu'en l'absence de charge, le boudin avant 32 comprimé se détend pour cabrer l'avant du train 21 comme on peut l'observer sur la figure 4.

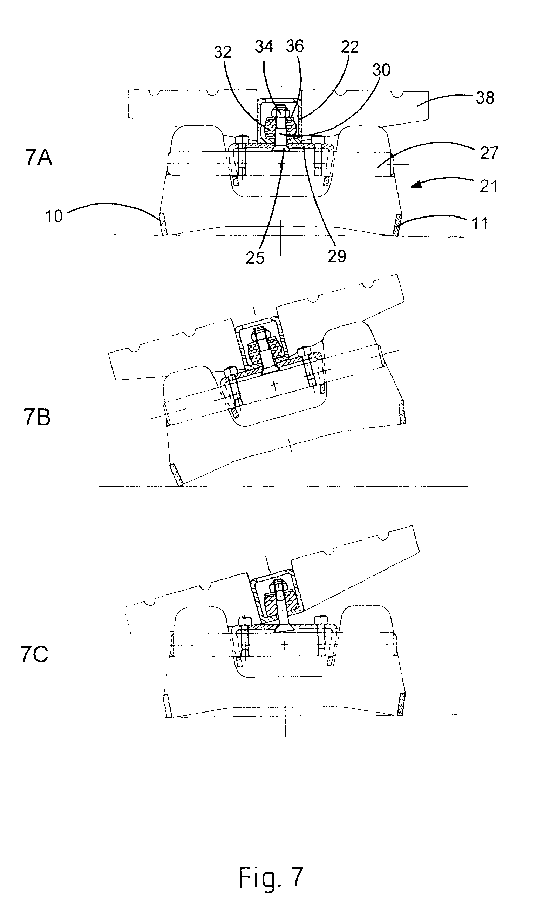

Sur la figure 7, on peut observer le comportement d'un train mettant en oeuvre le dispositif à boudins ci-dessus dans trois situations différentes. Sur les trois parties de la figure on peut observer la tête 25 de la vis 23 maintenue sous la plaque de montage 29 formant un pont entre les côtés gauche et droit du train et fixée au train 21 par l'élément axial 27. La tige 30 de la vis est disposée vers le haut et traverse la plaque de montage 29 ainsi que l'extrémité du châssis 22 . Le boudin compressible 32 est installé entre le châssis 22 et un écrou 34 de retenue et sa rondelle 36.

L'élément axial cylindrique 27 traverse, outre plaque de montage 1, le train 21 qui a ici une structure monobloc (à un seul ski).

On peut aussi observer le marchepied 38 sur lequel s'installe l'utilisateur.

Par un choix approprié de l'élasticité du boudin compressible, selon l'impulsion que l'on donne au châssis le train 21 peut soit conserver l'inclinaison par rapport au châssis dans le plan transversal (Figure 7B) sans compression supplémentaire du boudin, soit conserver l'inclinaison du support tandis que le châssis penche vers l'intérieur d'un virage (Figure 7C), par compression supplémentaire des boudins.

## Revendications

1. Un ski bob comprenant un châssis muni d'un train avant directeur doté d'une direction et d'un train arrière suiveur, caractérisé en ce qu'il comprend au moins un train avant directeur glissant ou un train arrière suiveur glissant, ledit train glissant comprenant une monture (1) pour son montage sur le châssis du ski bob, ladite monture (1) étant munie d'un ski unique ou de deux skis (2,3) formant, sur support plat, une semelle de glisse en prise de carres extérieures (10,11) permanente.

2. Un ski bob selon la revendication 1, caractérisé en ce que le ski unique ou les deux skis distincts (2,3) sont installés sur une monture (1) autorisant leur basculement d'avant en arrière.

3. Un ski bob selon l'une des revendications 1 et 2, caractérisé en ce qu'il comprend une semelle de forme concave faisant, à ses bords, des angles de prise de carres avec le support compris entre 2° et 20°.

4. Un ski bob selon l'une des revendications 1 à 3, caractérisé en ce qu'il comprend deux skis distincts (2,3) dont les semelles ne sont pas coplanaires et forment des angles a de prise de carres compris entre 2 ° et 20 °.

5. Un ski bob selon l'une des revendications 1, 2 et 4, caractérisé en ce que les deux skis distincts (2,3) sont installés sur une monture (1) autorisant le réglage des angles de prise de carres.

6. Un ski bob selon l'une des revendications 1 à 5, caractérisé en ce que les carres extérieures (10,11) ne sont pas sensiblement parallèles mais convergent ou divergent vers l'avant.

7. Un ski bob selon l'une des revendications 1 à 6, caractérisé en ce que l'avant et l'arrière du ou des skis sont libres de flexion vis à vis de leur monture (1).

8. Un ski bob selon l'une des revendications 1, 2 et 4 à 7, caractérisé en ce qu'il comprend deux skis distincts (2,3) installés sur une monture (1) autorisant le réglage de convergence ou de divergence des carres (10,11).

9. Un ski bob selon l'une des revendications 1 à 8, caractérisé en ce que l'angle de convergence ou de divergence des carres (10,11) est compris entre 2° et 20°.

10. Un ski bob selon l'une des revendications 1, 2, 6, 7 et 9, caractérisé en ce que ladite monture (1) est munie d'un ski unique.

11. Un ski bob selon l'une des revendications 2 à 10 , caractérisé en ce que la monture (1,29) autorisant le basculement d'avant en arrière du train glissant comprend deux vis (23,24) installées l'une derrière l'autre dont la tige (30,31) traverse des boudins (32,33) en matériau compressible installés entre le châssis (22) du ski bob et un écrou de retenue (34,35) et autorise également le basculement latéral du train glissant et comprend un moyen de rappel installé entre le châssis (22) du ski bob et la monture (1,29).
